# EUROPÄISCHE PATENTANMELDUNG

(11) **EP 2 093 203 A1**
(43) Veröffentlichungstag der Anmeldung: **26.08.2009**
(21) Anmeldenummer: 08003031.5
(22) Anmeldetag: 19.02.2008
(51) Int. Cl.: C05D 9/02

(54) **Bodenverbesserungsmittel**

(71) Anmelder: Ehrlich, Lutz, 31618 Liebenau (DE); Elsner, Harald, 30952 Ronnenberg (DE); Meyer, Michaela, 31542 Bad Nenndorf (DE)
(72) Erfinder: Ehrlich, Lutz, 31618 Liebenau (DE); Elsner, Harald, 30952 Ronnenberg (DE); Meyer, Michaela, 31542 Bad Nenndorf (DE)
(74) Vertreter: Körner, Peter

(57) **Zusammenfassung**

Die Erfindung betrifft ein Bodenverbesserungsmittel aus einem Gemisch aus
a) einem wässrigen Ascheextrakt und
b1) einer wässrigen Lösung aus Natriumhydroxid, Ethansäure und 1,2,3-Propantriol und/oder
b2) einer wässrigen Lösung aus Zucker, vorzugsweise Saccharose, Ethansäure und Kaliumhydrogen-tartrat.

## Beschreibung

Die vorliegende Erfindung betrifft ein Bodenverbesserungsmittel.

Bodenverbesserungsmittel umfassen Stoffe, die schon in relativ kleinen Mengen die allgemeine Bodenstruktur wie die Krümelung, den Lockerungsgrad, die Gasdurchlässigkeit oder die Wasserbindungsfähigkeit verbessern und damit die Bildung und Vermehrung von Mikroben fördern.

Im Unterschied dazu enthalten Düngemittel nur Nährstoffe, die die Defizite des Bodens an Mineralstoffen, Stickstoff und Phosphor ausgleichen sollen. Die Düngung hat aber keinen positiven Einfluss auf die Bodenstruktur, sondern führt vielmehr zur Verschlechterung des Bodens. Dies ist insbesondere auf die durch die Düngung verursachte Abnahme der im Boden lebenden Mikroben und höheren Lebewesen zurückzuführen. Außerdem ist als negative Begleiterscheinung einer intensiven Düngung die Anreicherung von Schadstoffen wie Nitrat im Grundwasser sowie die Kontamination von Oberflächengewässern bekannt.

Der Einsatz von Bodenverbesserungsmitteln stellt also eine Maßnahme zur Erhaltung und Steigerung der Bodenfruchtbarkeit dar, ohne die bekannten Nachteile einer konventionellen Düngung und Bodenbearbeitung aufzuweisen. Insbesondere soll mit einem Bodenverbesserungsmittel eine Aktivierung der im Boden lebenden Mikroben erreicht werden. Die aktivierten Mikroben fördern nämlich den Stickstoffkreislauf der Pflanzen, da grundsätzlich nur sie in der Lage sind, elementaren Stickstoff aus der Luft zu binden und in pflanzenverfügbare Stickstoffverbindungen umzuwandeln.

Als Boden wird die oberste Schicht der Erdrinde bezeichnet, in der Verwitterungsvorgänge ablaufen, die wesentlich an der Bodenbildung beteiligt sind. In chemischer Hinsicht ist die Verwitterung vor allem durch die hohe Beweglichkeit des Wassers und durch die Beteiligung von Ionen und organischen Substanzen sowie durch pH-Änderungen gekennzeichnet. Zur biochemischen Verwitterung tragen insbesondere Pflanzenwurzeln und niedere Vertreter der Bodenflora wie Bakterien, Algen und Pilze bei.

Die oberste, meist humushaltige Schicht ist bei im biologischen Gleichgewicht befindlichen Böden reich an organischem Material und Bodenlebewesen und bildet den für die Ernährung der Pflanzen wichtigsten Teil des Bodens. Mit Humus wird allgemein die Gesamtheit der im Boden befindlichen, abgestorbenen, pflanzlichen und tierischen Substanzen bezeichnet. Die Humusbildung ist das gemeinsame Werk von Bodentieren und Mikroorganismen.

Der pH-Wert des Bodens spielt ebenfalls eine wichtige Rolle. Dem aus der Atmung der Pflanzenwurzeln resultierenden Angebot an H⁺-lonen steht bei im biologischen Gleichgewicht befindlichen Böden eine ausgleichende Menge an Carbonaten und Bodenbasen gegenüber, die für eine Abpufferung sorgen und eine basische oder neutrale Reaktion des Boden bewirken. Solche Bodenverhältnisse werden von der Mehrzahl der Kulturpflanzen benötigt. Eine zusätzliche H⁺-Ionenzufuhr durch sauren Regen beschleunigt die Lösungsverwitterung der Carbonate und die Nährstoffauswaschung. Die Wirkungen des sauren Regens finden sich somit als Störung des ökologischen Gleichgewichts infolge Versauerung von Gewässern und Böden mit geringer Pufferkapazität.

Anreicherungen von Schwermetallsalzen können toxisch auf die Pflanzen und Mikroben wirken. Es ist auch bekannt, dass Schwermetalle durch eine Änderung des pH-Wertes für die Pflanzen verfügbar gemacht werden können. Insbesondere Waldpilze können erheblich Mengen an giftigen Schwermetallen wie Cadmium aufnehmen. Allgemein wird von einer so genannten Mobilisierung der Schwermetallionen gesprochen. Diese mobilisierten Schwermetallionen können dann auch vereinfacht in das Grundwasser und in Oberflächengewässer gelangen. So stellt die Zuführung mobilisierter Aluminium-Ionen insbesondere für die Fischzucht ein Problem dar, weil bei entsprechendem pH-Wert entstehendes Aluminiumhydroxid in die Kiemen der Fische gelangen und so die Atmung blockieren kann. Fischsterben ist die Folge.

Als Bodenverbesserungsmittel im weitesten Sinne werden beispielsweise Stallmist, Gründüngung, Kalk, Humus, Torfmull, Lignin-Derivate, Alginate, Pektine, Eisensulfate, Calciumpolysulfid, Sägemehl oder Silicate eingesetzt. Nachteilig an diesen Bodenverbesserungsmitteln ist ihre nur kurze und einseitige Wirkungsweise. Sie sind nicht geeignet, der Bodenversauerung und der toxischen Belastung der Böden entgegenzuwirken oder die natürliche Humusbildung zu unterstützen. Der Einsatz von Sägemehl ist darüber hinaus in einigen Ländern verboten. Stallmist wird oft in viel zu hohen Konzentrationen eingesetzt und führt dann zu einer Überdüngung der Böden. Das ökologische Gleichgewicht der Böden kann allenfalls vorübergehend wiederhergestellt werden.

Größere Bedeutung haben daher vor allem synthetische Produkte, die aber aus Gründen des Umweltschutzes abgelehnt werden.

Wüstenböden fehlt auch bei ausreichender Wasserzufuhr häufig eine für das Pflanzenwachstum erforderliche Humusschicht. Außerdem hat sich herausgestellt, dass das zur Bewässerung eingesetzte Wasser zu schnell verdunstet oder versickert. Bei Einsatz von Salzwasser zur Bewässerung findet eine nachteilige Versalzung der Wüstenböden statt.

Eine übermäßige Bewässerung führt aber auch sonst zur Versalzung der Wüstenboden, da Salze aus den tieferen Bodenschichten in die oberen, von den Pflanzenwurzeln durchsetzten Bodenschichten übergehen.

Aus der DE 37 44 569 C1 ist ein Bodenverbesserungsmittel mit einem Gehalt an einem bodenverträglichen Elektrolyten und einem Invertzucker in einem Verhältnis von 20:1 bis 1:10 bekannt. Vorzugsweise wird als Elektrolyt Natriumacetat verwendet. Bei dem Invertzucker handelt es sich vorzugsweise um invertierte Saccharose mit einem Inversionsgrad von 55 bis 75 %, besonders bevorzugt von 60 bis 70 %. Das Bodenverbesserungsmittel liegt gemäß einer vorteilhaften Ausgestaltung der Erfindung als wässrige Lösung vor, die etwa 0,01 bis 1,0 Gew.-%, insbesondere 0,1 Gew.-% der Mischung aus Elektrolyt und Invertzucker enthält.

Ein solches Bodenverbesserungsmittel soll den Boden derart regenerieren, dass eine verbesserte Aufnahme von-Nährstoffen durch die Pflanzen erzielt und die Erträge in der Landwirtschaft gesteigert werden. Nachteilig ist jedoch, dass die Nährstoffe und die Feuchtigkeit nur im geringen Maße im Boden gespeichert werden, so dass die eingebrachten Substanzen bei erneuter Bewässerung relativ schnell ausgewaschen werden.

Aus der DE 33 32 222 A1 ist ein Verfahren zur Herstellung eines Bodenimpfstoffes und ein nach dem Verfahren hergestellter Bodenimpfstoff bekannt. Als Bodenimpfstoff wird eine wässrige Lösung verwendet, die aus 60 Gew.-% Natronlauge, 30 Gew.-% Essigsäure und 10 Gew.-% Glycerin besteht. Für eine bevorzugte Mischung des Bodenimpfstoffes wird 50%ige Natronlauge, 25%ige Essigsäure und 85%iges Glycerin verwendet. Für eine andere bevorzugte Mischung des Bodenimpfstoffes wird 30%ige Natronlauge, 5%ige Essigsäure und 50%iges Glycerin verwendet.

Ein derartiger Bodenimpfstoff dient zur Neutralisation von versauerten Böden, wodurch das Wachstum der Pflanzen und Mikroorganismen verbessert werden soll.

Ein weiteres Bodenverbesserungsmittel ist aus der EP 1 285 901 A1 bekannt, nämlich ein Gemisch aus einer unter stetigem Rühren hergestellten ersten wässrigen Lösung aus Natriumhydroxid, Ethansäure und 1,2,3-Propantriol und einer unter stetigem Rühren hergestellten zweiten wässrigen Lösung aus Saccharose, Kaliumhydrogentartrat und Ethansäure.

Ausgehend von diesem Stand der Technik liegt der Erfindung die Aufgabe zugrunde, den Wirkungsgrad der eingangs genannten Bodenverbesserungsmittel zu erhöhen.

Diese Aufgabe wird bei einem Bodenverbesserungsmittel der eingangs genannten Art durch die Merkmale des Anspruchs 1 gelöst. Weiterbildungen und vorteilhafte Ausgestaltungen der Erfindung ergeben sich aus den Unteransprüchen.

Erfindungsgemäß ist das Bodenverbesserungsmittel ein Gemisch aus
a) einem wässrigen Ascheextrakt und
b1) einer wässrigen Lösung aus Natriumhydroxid, Ethansäure und 1,2,3-Propantriol und/oder
b2) einer wässrigen Lösung aus Zucker, vorzugsweise Saccharose, Ethansäure und Kaliumhydrogen-tartrat.

Ein wässriger Ascheextrakt wird erfindungsgemäß durch Eluierung von Asche mittels Wasser und anschließender Abtrennung fester Bestandteile erhalten. Bei den festen Bestandteilen handelt es sich zum einen um wasserunlösliche Ascherückstände und zum anderen um Niederschläge, insbesondere um Schwermetall-Niederschläge, die aufgrund des bei der Eluierung vorliegenden alkalischen Milieus ausfallen. Vorzugsweise erfolgt die Eluierung der Asche unter Rühren. Der Wirkungsgrad der Eluierung wird vorzugsweise durch eine vorgegebene Temperierung erhöht. Die anschließende Abtrennung der wässrigen Phase kann durch Dekantieren, Filtrieren oder Zentrifugieren erfolgen. In dem wässrigen Ascheextrakt finden sich wertvolle Nährstoffe und Spurenelemente. Zu den Spurenelementen zählen diverse Schwermetalle, die aufgrund des genannten abgetrennten Niederschlags im Ascheextrakt vorteilhaft nur noch in entsprechend niedriger Konzentration vorliegen.

Die genannte Trennung durch Filtrieren hat den Vorteil, dass die verwendeten Filter so gewählt werden können, dass möglichst keine ausgefällten Schwermetalle in das Eluat gelangen und dieses kontaminieren. Die Filtration kann mit unterschiedlichen Filtern wiederholt werden, um den Wirkungsgrad der Filtration zu erhöhen. So wird eine optimale Auslaugung erreicht.

Es hat sich nun herausgestellt, dass die Kombination aus wässrigem Ascheextrakt und einer wässrigen Lösung aus Natriumhydroxid, Ethansäure und 1,2,3-Propantriol und/oder einer wässrigen Lösung aus Zucker, insbesondere Saccharose, Kaliumhydrogentartrat und Ethansäure zu einem gegenüber den bekannten Bodenverbesserungsmitteln, wie sie beispielsweise in der EP 1 285 901 A1 beschrieben sind, verstärkten Pflanzenwachstum führt. Obwohl die exakte Wirkung des Bodenverbesserungsmittels unbekannt ist, zeigt sich der Erfolg bereits nach wenigen Tagen anhand der Bildung und Vermehrung von Mikroben.

Durch das erfindungsgemäße Bodenverbesserungsmittel wird offensichtlich eine Aktivierung der im Boden lebenden Mikroben erreicht. Die aktivierten Mikroben fördern den Stickstoffkreislauf der Pflanzen, da grundsätzlich nur sie in der Lage sind, elementaren Stickstoff aus der Luft zu binden und in pflanzenverfügbare Stickstoffverbindungen umzuwandeln.

Die im Ascheextrakt enthaltenen Stoffe entfalten im Zusammenspiel mit den Komponenten b1) und b2) eine optimale Wirkung auf das Mikrobenwachstum.

Das Mischungsverhältnis der die jeweiligen Komponente b1) und b2) bildenden Bestandteile ist abhängig von der Beschaffenheit der zu behandelnden Böden und lässt sich anhand von Feldversuchen oder Bodenanalysen bestimmen.

Während Komponente b1) alkalische Eigenschaften aufweist, ist Komponente b2) sauer eingestellt. Ist der zu behandelnde Boden alkalisch wird vorzugsweise eine größere Menge der Komponente b2) verwendet. Ist der zu behandelnde Boden dagegen sauer, wird eine größere Menge der Komponente b1) verwendet. Bevorzugte Zusammensetzungen sind weiter unten angegeben.

Zucker, vorzugsweise Saccharose, dient als Nährstoff und ist Energieträger für die im Boden lebenden Tiere und Mikroorganismen. Die Saccharose soll für die Aktivierung der im Boden lebenden Tiere und Mikroorganismen zur Bildung von Humus sorgen. Der Anteil wird entsprechend den Gegebenheiten bemessen.

Insgesamt wird durch das erfindungsgemäße Bodenverbesserungsmittel die allgemeine Bodenstruktur, insbesondere die Krümelung, der Lockerungsgrad, die Gasdurchlässigkeit und die Wasserbindungsfähigkeit des Bodens, verbessert.

Hierbei wird sich die Erkenntnis zunutze gemacht, dass Asche als solche, wie sie beispielsweise auch in der EP 1 285 901 A1 vorgesehen ist, also in fester Form, als Bodenverbesserungsmittel ungeeignet ist. In bekannten Aschen, beispielsweise in Holz- und Kohlenasche, sind nämlich zahlreiche Schwermetalle wie Chrom, Blei, Zink, Cadmium und andere in großen Mengen enthalten. Dies ist insbesondere darauf zurückzuführen, dass Holz, aber auch andere Biomassen, mit diversen Stoffen behandelt werden, welche nach der Verbrennung zu einer erheblichen Kontamination der Asche führen. In der Literatur werden auch eisenhaltige Partikel, die in der Asche enthalten sein können, als problematisch für das Pflanzenwachstum beschrieben. Diese Schwermetalle führen regelrecht zu einer Vergiftung des Bodens und wirken sich negativ auf das Mikrobenwachstum aus. Hinzu kommt, dass Asche in fester Form, wenn sie auf den Boden aufgebracht wird, als Düngemittel wirkt, weil die Nährstoffe konzentriert vorliegen.

Düngemittel als solche führen aber, wie bereits oben erwähnt, zu einer Verschlechterung des Bodens, da diese eine Abnahme der im Boden lebenden Mikroben und höheren Lebewesen verursachen können.

Die genaue Zusammensetzung des wässrigen Ascheextrakts ist abhängig von der verwendeten Asche. Vorzugsweise handelt es sich bei der Asche um naturbelassene Biomassenasche, nämlich um die bei der Verbrennung von naturbelassener Biomasse, insbesondere von Holz, Rinde, Getreidestroh und Getreideganzpflanzen, in Feuerungsanlagen zurückbleibenden Bestandteile.

Alternativ ist vorgesehen, dass der wässrige Ascheextrakt ein wässriges Eluat aus der Asche behandelter Biomasse, insbesondere Bauholz, oder anderer verbrennbarer Gegenstände, insbesondere von Hausmüll, oder der Pyrolyseasche ist. Die genannten Aschen können quasi als Problemaschen bezeichnet werden, da sie üblicherweise stark kontaminiert sind. Im wässrigen Ascheextrakt sind diese Kontaminationen vorteilhaft nicht mehr in schädlicher Konzentration enthalten.

Durch die Verwendung eines Ascheextraktes im erfindungsgemäßen Bodenverbesserungsmittel werden insbesondere die für das Wachstum von Mikroben und Pflanzen erforderlichen Spurenelemente zugeführt, welche aufgrund der Verwendung von Biomassenasche in optimaler Zusammensetzung vorliegen.

Vergilbte und kranke Pflanzen können auf überraschende Weise wieder begrünt und vitalisiert werden. Daher wird das erfindungsgemäße Bodenverbesserungsmittel als Bodenvitalisierungsmittel bezeichnet.

Das Bodenvitatisierungsmittel hat unter anderen einen direkten Einfluss aus den pH-Wert des Bodens und stellt innerhalb kürzester Zeit das biologische Gleichgewicht im Boden wieder her. Der Boden kann mehr Nährstoffe und Feuchtigkeit aufnehmen und über längere Zeit speichern.

Es hat sich gezeigt, dass der Boden Wasser schneller aufnimmt, wenn dieser mit dem Bodenverbesserungsmittel behandelt wird. Dieser Effekt ist insbesondere bei der Bewässerung von trockenen Böden, insbesondere Wüstenböden, von Bedeutung, da weniger Wasser verdunstet, wenn dieses möglichst schnell nach der Bewässerung vom Boden aufgenommen wird.

Eine Erklärung könnte sein, dass die Inhaltsstoffe aus dem im erfindungsgemäßen Bodenverbesserungsmittel enthaltenen Aschextrakt, vorzugsweise aus dem wässrigen Extrakt der Holzasche, stark hygroskopisch sind.

### Hierzu wurde folgende Untersuchung durchgeführt:

Ein wässriger Extrakt aus Holzasche wurde bis zur Trockne eingedampft und anschließend bei Raumtemperatur offen stehen gelassen. Nach kurzer Zeit zeigte sich, dass die nach dem Eindampfen zurückgebliebenen trockenen, weißen Inhaltsstoffe Wasser aus der Umgebungsluft aufnahmen. Mit zunehmender Zeit wurde soviel Wasser aufgenommen, das wieder eine Lösung entstand, wobei abhängig von der Löslichkeit der einzelnen Inhaltsstoffe auch unlösliche Anteile in der Lösung enthalten waren. Fazit dieser Untersuchung war, dass 100g Trockensubstanz bei ca. 70% rel. Luftfeuchtigkeit und ca. 15 °C innerhalb von 24 Stunden 120 g Wasser aufnahmen.

Die Untersuchung bestätigt diesen positiven Effekt des Bodenverbesserungsmittels mit Ascheextrakt auf die Wasseraufnahmefähigkeit und Wasserspeicherung von Böden. Dies ist, wie gesagt, insbesondere für trockene Böden von Bedeutung. Die Versteppung kann somit vermindert werden und Wüstenböden unterstützend für die Landwirtschaft nutzbar gemacht werden.

Der Effekt der verbesserten Wasseraufnahme- und -speicherung ist abhängig vom Boden sowie von der Konzentration des erfindungsgemäßen Bodenverbesserungsmittels.

Eine erhöhte Aufnahme und Speicherung der Nährstoffe und Feuchtigkeit hat einerseits einen unmittelbaren Einfluss auf das Pflanzenwachstum, da die zum Pflanzenwachstum erforderlichen Stoffe über längere Zeit zur Verfügung stehen. Andererseits ist aber auch ein mittelbarer Einfluss auf das Pflanzenwachstum gegeben, der sich aus einer verstärkten Vermehrung der im Boden lebenden Tiere und Mikroorganismen ergibt. Der Boden wird praktisch vitalisiert, was zu einer erhöhten Humusbildung führt. Humus stellt dann wiederum unmittelbar einen guten Nährstoffboden für die Pflanzen dar.

Vorteilhaft wird im Rahmen der Erfindung die üblicherweise in großen Mengen anfallende Asche nutzbar gemacht und landet erst nach der Eluierung zur Herstellung des Ascheextrakts als Rückstand entweder auf Deponien oder wird in der Industrie weiter verwendet.

Die Verwendung von Biomassenasche führt vorteilhaft auch zu einem geschlossenen Kohlendioxidkreislauf, da vorhandene Biomasse, beispielsweise wachsende Bäume, das Kohlendioxid aufnimmt, das bei der thermischen Umwandlung entsteht. Der Biomasseneinsatz in einem geschlossenen Kohlenstoffkreislauf ist jedoch nur möglich, wenn nicht mehr Biomasse verwendet wird, als im Ökosystem nachwächst.

Eine Weiterbildung der Erfindung sieht vor, dass Komponente b1) aus etwa 10 bis etwa 60 Gew.-% einer etwa 50%igen Natronlauge, aus etwa 5 bis etwa 30 Gew.- % einer etwa 25%igen Ethansäure und aus etwa 1 bis etwa 25 Gew.-% eines 85%igen 1,2,3-Propantriols besteht.

Eine vorteilhafte Ausgestaltung der Erfindung sieht vor, dass die wässrige Komponente b2) etwa 80 bis etwa 99 Gew.-% Zucker, vorzugsweise Saccharose, etwa 0,1 bis etwa 10 Gew.-% Kaliumhydrogentartrat und etwa 1 bis etwa 20 Gew.-% einer etwa 25%igen Ethansäure, bezogen auf 100 Gew.-% Komponente b2), aufweist.

Vorzugsweise beträgt der Trockensubstanzgehalt des Ascheextrakts 1 bis 100 g pro Liter. Der Trockensubstanzgehalt kann mit einer üblichen, dem Fachmann aus dem Trinkwasserbereich bekannten Methode bestimmt werden.

Weiterhin ist vorgesehen, dass das Gemisch 10 bis 90 Gew.-% der Komponente a) und 10 bis 90 Gew.-% der Komponente b1) und/oder Komponente b2) aufweist.

Zweckmäßigerweise beträgt das Mischungsverhältnis zwischen Komponente b1) und Komponente b2) etwa 1:10 bis etwa 10:1.

Das beste Mischungsverhältnis der beiden Komponenten b1) und b2) ist abhängig von der Beschaffenheit des zu behandelnden Bodens und lässt sich anhand einfacher Feldversuche oder Bodenanalysen bestimmen.

Das Mischungsverhältnis zwischen den beiden Lösungen sollte so bemessen sein, dass ein wirksames Puffersystem aus Essigsäure und Natriumacetat entsteht, welches sowohl gegenüber Säuren als auch Basen wirkt. Die Wirkung der im erfindungsgemäßen Bodenvitalisierungsmittel enthaltenen Puffersubstanzen beruht auf der Abfangreaktion von H⁺- bzw. OH⁻-lonen unter Bildung schwacher Säuren bzw. Basen aufgrund ihres Dissoziationsgleichgewichts. Damit wird einer Versauerung des Bodens entgegengewirkt. Durch die Pufferung wird außerdem ein Auswaschen der teilweise als Spurenelemente dienenden Schwermetallionen vermieden. Diese Spurenelemente können dann von den Pflanzen über die Wurzeln aufgenommen werden.

Da verschiedene Pflanzen, insbesondere Bonsaiarten wie die Kiefer oder auch Nutzpflanzen wie die Kartoffel, ein leicht saueres Milieu des Bodens bevorzugen, ist das erfindungsgemäße Bodenverbesserungsmittel entsprechend durch Wahl des Mischungsverhältnis der Komponenten a), b1) und b2) einstellbar.

Das Bodenverbesserungsmittel ist mithin vorteilhaft flexibel herstellbar und kann an die zu behandelnden Böden angepasst werden.

Das Bodenverbesserungsmittel ist, wie oben bereits ausgeführt, auch pH-Wert neutral einstellbar, so dass insbesondere auch für den privaten Anwender die Gefahr von Verätzungen durch das Bodenverbesserungsmittel vermieden wird.

Eine vorteilhafte Ausgestaltung der Erfindung sieht vor, dass dem erfindungsgemäßen Bodenverbesserungsmittel zusätzlich Carbonsäuren, besonders bevorzugt Ascorbinsäure, Zitronensäure und/oder Äpfelsäure zumischbar sind.

Dieser Zusatz führ zu einer weiteren Stärkung der Pflanzen, insbesondere zu einer Steigerung des Pflanzenwachstums. Zusätzlich ist mittels dieser Carbonsäuren der gewünschte pH-Wert des Bodenverbesserungsmittels einstellbar.

Vorzugsweise sind dem Bodenverbesserungsmittel vor dem Auf- oder Einbringen auf oder in den Boden noch gezielt Spurenelemente im ppm-Bereich, vorzugsweise Selen-Salze, zusetzbar. Durch das Bodenverbesserungsmittel wird die Bioverfügbarkeit dieser Spurenelemente erhöht.

Die Erfindung betrifft außerdem ein Verfahren zur Herstellung eines Bodenverbesserungsmittels nach einem der Ansprüche 1 bis 7.

Das erfindungsgemäße Verfahren umfasst erfindungsgemäß folgende Verfahrensschritte:
A) Eluieren von Asche mittels Wasser und anschließender Abtrennung der wässrigen Phase zur Herstellung des wässrigen Ascheextrakts als Komponente a)
   und
B1) Herstellen der Komponente b1) durch Mischen der wässrigen Natriumhydroxid-Lösung mit Ethansäure und 1,2,3-Propantriol, vorzugsweise bei einer Temperatur von etwa 40 bis etwa 70 °C
   und/oder
B2) Herstellen der Komponente b2) durch Lösen von Zucker in Wasser bei etwa 100 bis etwa 130 °C für etwa 1 bis etwa 60 min unter ständigem Rühren und anschließender Zugabe von Ethansäure und Kaliumhydrogentartrat bei einer Temperatur von etwa 30 bis etwa 80 °C unter ständigem Rühren
   und
D1) Mischen der Komponenten a) und b1)
   oder
D2) Mischen der Komponenten a) und b2)
   oder
D3) Mischen der Komponente b1) und b2) unter ständigem Rühren, wobei beim Mischen der Lösungen eine Temperatur von 80° C nicht überschritten wird, und anschließende Zugabe der Komponente a) zu dieser Mischung.

Vorzugsweise wird der Ascheextrakt aus Rostasche gewonnen, da diese am wenigsten mit Schwermetallen belastet ist.

Weiterhin betrifft die Erfindung die Verwendung des Bodenverbesserungsmittels nach einem der Ansprüche 1 bis 7.

Dieses wird erfindungsgemäß in einer wässrigen Verdünnung von 1:10 bis 1:1000 verwendet.

Eine Weiterbildung der Erfindung sieht vor, dass als Verdünnungsmittel für das Bodenverbesserungsmittel ein flüssiges Düngemittel oder ein flüssiges Pflanzenschutzmittel verwendet wird.

Dadurch lassen sich insbesondere Kosten für die Ausbringung reduzieren, weil ein zusätzlicher Arbeitsschritt eingespart wird.

Flüssige Düngemittel sind insbesondere solche, die bei der anaeroben Gärung von Biomasse, insbesondere von landwirtschaftlichen Abfällen, Gülle, Stallmist, biologisch abbaubarem Hausmüll oder Gartenabfällen entstehen. Bekannt ist auch, Ammoniak direkt in den Boden einzubringen.

Ein derart hergestelltes Düngemittel enthält alle humusbildenden Stoffe, die bereits vor der anaeroben Gärung in der als Ausgangsstoff dienenden Biomasse vorhanden waren. Durch die Kombination des die humusbildenden Stoffe enthaltenen flüssigen Düngemittels mit dem erfindungsgemäßen Bodenverbesserungsmittel wird bei der Aufbringung auf einen Boden eine verbesserte Wasserspeicherung, eine verbesserte Aktivierung der im Boden lebenden Mikroben und damit auch eine Auflockerung des Bodens erreicht. Die Auflockerung bewirkt, dass Luft von der Bodenoberfläche her tiefer in die Bodenschichten eindringen kann.

Vorzugsweise wird das Bodenverbesserungsmittel durch Injektionsmaschinen wie bei der Flüssigdüngung nach dem so genannten Cultan-Verfahren in den Boden eingebracht. Vorteilhaft lässt sich das Bodenverbesserungsmittel auf diese Weise verlustfrei in den Boden einarbeiten. Insbesondere Spurenelemente, die im Bodenverbesserungsmittel in nur sehr geringer Konzentration vorliegen, werden so optimal in den Boden eingebracht. Die in der Praxis eingesetzten Maschinen können 50 bis 3.000 Liter Flüssigkeit / ha ausbringen.

Eine Verteilung des Bodenverbesserungsmittels ist auch nach dem Prinzip der Gülle-Ausbringung möglich.

Das erfindungsgemäße Bodenvitalisierungsmittel ist im Übrigen auch als Wasservitalisierungsmittel verwendbar. Ein derartiges Wasservitalisierungsmittel eignet sich besonders zur Wiederherstellung des biologischen Gleichgewichts in Gewässern und führt damit zu mehr Artenreichtum innerhalb der Gewässer.

Insbesondere kann aber mittels des erfindungsgemäßen Wasservitalisierungsmittels ein gesteigertes Wachstum von Wasserpflanzen, insbesondere von Algen, und von Plankton erreicht werden.

Algen sind niedere Pflanzen aus einzelnen Zellen oder Zellverbänden. Sie werden unter anderem als Nahrungsmittel genutzt oder dienen wegen ihrer Inhaltsstoffe als wertvolle Rohstoffquelle für die Gewinnung von Alginaten, Alginsäure und Carrageen, die vielfältige Anwendung finden. Voraussetzung für die wirtschaftliche Nutzung der Algen ist jedoch ihre Kultivierung, die angesichts der Belastung des Wassers teilweise nicht ohne Probleme ist. Hier greift das Wasservitalisierungsmittel ein, durch das eine Steigerung der Algenerträge erreicht wird.

Unter Plankton sind alle frei im Meer- oder Süßwasser schwebenden, meist mikroskopisch kleinen pflanzlichen und tierischen Organismen zu verstehen, die keine oder eine nur geringe Eigenbewegung besitzen. Das pflanzliche Plankton dient als Nahrung für tierisches Plankton, das seinerseits Nahrungsquelle für Fische und andere Wasserbewohner ist. Fische bilden wiederum eine Nahrungsquelle für den Menschen. Das Wasservitalisierungsmittel sorgt in diesem Fall für eine verstärkte Vermehrung von Plankton und damit für eine Zunahme der Fischbestände.

Plankton ist aber auch für den menschlichen Genuss bestimmt. Hierzu werden bereits Anlagen betrieben, in denen Plankton unter definierten Bedingungen hergestellt wird.

Für die Anwendung wird das erfindungsgemäße Wasservitalisierungsmittel mindestens um den Faktor 10000 verdünnt. Die konkrete Konzentration und Zusammensetzung des Wasservitalisierungsmittels richtet sich natürlich auch nach der Zusammensetzung und Beschaffenheit des zu behandelnden Wassers.

### Ausführungsbeispiel 1:

Für Versuchszwecke wurde zunächst in drei Ansätzen ein künstlicher Boden aus 1 kg gewaschenem Quarzsand und 300 ml demineralisiertem Wasser hergestellt.

Jeder Ansatz wurde mit der gleichen Anzahl von Pflanzensamen versetzt. Dem ersten Ansatz wurden 10 ml reines Wasser zugesetzt. Der zweite Ansatz erhielt 10 ml eines Bodenverbesserungsmittels aus den Komponenten b1) und b2) und der dritte Ansatz erhielt 10 ml eines Bodenverbesserungsmittel aus den Komponenten a) und b1) sowie b2).

Alle drei Ansätze erhielten zusätzlich in gleicher Menge ein handelsübliches flüssiges Düngemittel, welches die für die Pflanzen erforderlichen Nährstoffe enthielt.

Der dritte Ansatz zeigt das im Vergleich beste Pflanzenwachstum, gefolgt von Ansatz 2.

### Ausführungsbeispiel 2:

Jeweils 100 ml Brunnenwasser aus einer Tiefe von 8 bis 12 Meter wurde in einem ersten Ansatz mit 0,1 ml Wasser, in einem zweiten Ansatz mit 0,1 ml eines Bodenverbesserungsmittels aus den Komponenten b1) und b2) und in einem dritten Ansatz mit 0.1 ml eines Bodenverbesserungsmittels aus den Komponenten a) und b1) sowie b2) versetzt.

Nach genau 5 Tagen wurde die Gesamtkeimzahl in den Ansätzen bestimmt. Der erste Ansatz wies eine Gesamtkeimzahl von etwa 240 KBE/ml auf. Der zweite Ansatz hatte eine Gesamtkeimzahl von etwa 4000 KBE/ml und im dritten Ansatz wurde eine Gesamtkeimzahl von mehr als 10.000 KBE/ml nachgewiesen.

Überraschenderweise erhöhte sich die Gesamtkeimzahl im dritten Ansatz, obwohl der pH-Wert des dritten Ansatzes nach Zugabe des Bodenverbesserungsmittels bei etwa pH 11 lag

### Zusammensetzungen:

Die für die Ausführungsbeispiele 1 und 2 verwendeten Komponente a), b1) und b2) setzten sich wie folgt zusammen:
Komponente a):
   - ein wässriger Holzascheextrakt mit einem Trockensubstanzgehalt von 19 g/l
Komponente b1):
   - 50 Gew.-% einer 50%igen Natronlauge
   - 40 Gew.-% einer 25%igen Ethansäure
   - 10 Gew.-% eines 85%igen 1,2,3-Propantriols
Komponente b2):
   - 20 Gew.-% Wasser
   - 80 Gew.-% Saccharose
   - 2 Gew.-% Kaliumhydrogentartrat
   - 20 Gew.-% einer 25%igen Essigsäure

### Mischungsverhältnisse:

Für den zweiten Ansatz wurden die Komponenten b1) und b2) im Verhältnis 8:2 miteinander gemischt.

Für den dritten Ansatz wurde eine entsprechende Mischung der Komponenten b1) und b2) mit Komponente a) im Verhältnis 9:1 gemischt.

## Patentansprüche

**1.** Bodenverbesserungsmittel aus einem Gemisch aus
a) einem wässrigen Ascheextrakt und
b1) einer wässrigen Lösung aus Natriumhydroxid, Ethansäure und 1,2,3-Propantriol und/oder
b2)einer wässrigen Lösung aus Zucker, vorzugsweise Saccharose, Ethansäure und Kaliumhydrogentartrat.

**2.** Bodenverbesserungsmittel nach Anspruch 1, **dadurch gekennzeichnet, dass** der wässrige Ascheextrakt ein wässriges Eluat aus der Asche naturbelassener Biomasse ist.

**3.** Bodenverbesserungsmittel nach Anspruch 1 oder 2, **dadurch gekennzeichnet, dass** der wässrige Ascheextrakt ein wässriges Eluat aus der Asche behandelter Biomasse, insbesondere Bauholz, oder anderer verbrennbarer Gegenstände, insbesondere von Hausmüll, oder der Pyrolyse ist.

**4.** Bodenverbesserungsmittel nach einem der Ansprüche 1 bis 3, **dadurch gekennzeichnet, dass** Komponente b1) aus etwa 10 bis etwa 60 Gew.-% einer etwa 50%igen Natronlauge, aus etwa 5 bis etwa 30 Gew.-% einer etwa 25%igen Ethansäure und aus etwa 1 bis etwa 25 Gew.-% eines etwa 85%igen 1,2,3-Propantriols besteht.

**5.** Bodenverbesserungsmittel nach einem der Ansprüche 1 bis 4, **dadurch gekennzeichnet, dass** die Komponente b2) aus etwa 80 bis etwa 99 Gew.-% Zucker und etwa 1 bis etwa 20 Gew.-Teile Wasser sowie etwa 0,1 bis etwa 10 Gew.- % Kaliumhydrogentartrat und etwa 1 bis etwa 20 Gew.-% einer etwa 25%igen bis etwa 99%igen Ethansäure, letztere beiden Bestandteile bezogen auf 100 Gew.-% der Summer aus Zucker und Wasser, besteht.

**6.** Bodenverbesserungsmittel nach einem der Ansprüche 1 bis 5, **dadurch kennzeichnet, dass** der Trockensubstanzgehalt des Ascheextrakts 1 bis 100 g pro Liter beträgt.

**7.** Bodenverbesserungsmittel nach Anspruch 6, **dadurch gekennzeichnet, dass** das Gemisch 10 bis 90 Gew.-% der Komponente a) und 10 bis 90 Gew.-% der Komponente b1) und/oder Komponente b2) aufweist.

**8.** Bodenverbesserungsmittel nach einem der Ansprüche 1 bis 7, **dadurch gekennzeichnet, dass** Mischungsverhältnis zwischen Komponente b1) und Komponente b2) etwa 1:10 bis etwa 10:1 beträgt.

**10.** Verfahren zum Herstellen eines Bodenverbesserungsmittels nach einem der Ansprüche 1 bis 8, **gekennzeichnet durch** folgende Verfahrensschritte:
A) Eluieren von Asche mittels Wasser und anschließender Abtrennung der wässrigen Phase zur Herstellung des wässrigen Ascheextrakts als Komponente a)
und
B1) Herstellen der Komponente b1) **durch** Mischen der wässrigen Natriumhydroxid-Lösung mit Ethansäure und 1,2,3-Propantriol, vorzugsweise bei einer Temperatur von etwa 40 bis etwa 70 °C
und/oder
B2) Herstellen der Komponente b2) **durch** Lösen von Zucker in Wasser bei etwa 100 bis etwa 130 °C für etwa 1 bis etwa 60 min unter ständigem Rühren und anschließender Zugabe von Ethansäure und Kaliumhydrogentartrat bei einer Temperatur von etwa 30 bis etwa 80 °C unter ständigem Rühren und
D1) Mischen der Komponenten a) und b1)
oder
D2) Mischen der Komponenten a) und b2)
oder
D3) Mischen der Komponente b1) und b2) unter ständigem Rühren, wobei beim Mischen der Lösungen eine Temperatur von 80° C nicht überschritten wird, und anschließende Zugabe der Komponente a) zu dieser Mischung.

**10.** Verwendung des Bodenverbesserungsmittels nach einem der Ansprüche 1 bis 8 in einer wässrigen Verdünnung von 1:10 bis 1:1000, vorzugsweise 1:100 bis 1:1000.

**11.** Verwendung nach Anspruch 10, **dadurch gekennzeichnet, dass** als Verdünnungsmittel für das Bodenverbesserungsmittel ein flüssiges Düngemittel oder ein flüssiges Pflanzenschutzmittel verwendet wird.
